# EUROPEAN PATENT APPLICATION

(11) **EP 1 116 638 A1**
(43) Date of publication of application: **18.07.2001**
(21) Application number: 00306789.9
(22) Date of filing: 09.08.2000
(51) Int. Cl.: B61F 5/52, B61D 17/18, F16F 7/01

(54) **Railway vehicle bogie with vibrations reducing device**

(30) Priority: 17.01.2000 JP 2000010268
(71) Applicant: Hitachi, Ltd., Chiyoda-ku, Tokyo 101-8010 (JP)
(72) Inventor: Sebata, Michio, Kudamatsu-shi, Yamaguchi 744 0061 (JP); Makino, Toshiaki, Kudamatsu-shi, Yamaguchi 744 0062 (JP); Hiraishi, Motomi, Kudamatsu-shi, Yamaguchi 744 0011 (JP); Nakamura, Minoru, Kudamatsu-shi, Yamaguchi 744 0042 (JP)
(74) Representative: Hackney, Nigel John

(57) **Abstract**

To an interior portion of a side beam (11) of a bogie car, a vessel (52) in which a particle shape member (51) is accommodated is installed, this vessel (52) serves as a reinforcement of the side beam. An excitation source according to the track irregular arrangement is transmitted from vehicle wheels (20) to a bogie frame (10) through an axle spring member etc.. The vibration energy which is generated in the side beam (11) of the bogie frame (20) is converted to a kinetic energy of the particle shape member (51) in accordance with the collision of the particle shape member (51) in the vessel (52) and then the vibrations in the side beam (11) of the bogie frame (10) can be reduced. Accordingly, the vibrations from the vehicle wheels (20) which are generated according to the track irregular arrangement or the unbalance of the vehicle wheels (20) can be reduced at the side beam portion and the vibration propagation to other portions can be restrained. In a railway vehicle use bogie car, the vibrations which are transmitted from the bogie frame (10) to a car body (40) can be reduced and the noises in an inner side car can be restrained.

## Description

The present invention relates to a railway vehicle and a railway vehicle use bogie car and in particularly to relates to a railway vehicle use bogie car. The railway vehicle in the present invention means a vehicle which runs on a track.

As stated on Japanese application utility model publication No. Sho 58-1406, a bogie frame and a car body of a railway vehicle are connected with a traction link etc. The bogie frame of the railway vehicle supports the car body through an air cushion member (an air spring member). An axle of a vehicle wheel supports the bogie frame through a spring member.

Further, as a sound shielding, panel using a particle shape member, there is Japanese application patent laid-open publication No. Hei 10-266388. In this Japanese application patent laid-open publication No. Hei 10-266388, in a floor of a car body using an aluminum honeycomb panel, in an interior portion of the panel, powders having a particle size of 30 micrometer - 1000 micrometer are accommodated, a vibration control in an upper and a lower direction of the floor of the car body is carried out.

Further, to an upper portion of the bogie frame the air cushion member is installed, through the air cushion member the car body is supported. With this air cushion member, the vibrations having a comparative low frequency band area of a frequency component of 1-3 Hz can be reduced widely.

Further, the axle of the vehicle wheel supports the bogie frame through the spring member. Further, an axle damper is arranged in parallel form. With this construction, against the excitation according to the unevenness of the track irregular arrangement, the vibrations which are transmitted to the bogie frame from the vehicle wheel can be reduced according to the spring member and the damping action.

According to an upper and lower direction vibration, a right and left direction vibration, and a before and back direction (a running direction of the vehicle) vibration, which generate mainly in the bogie frame side, the vehicle wheel is excited according to the unevenness of the track irregular arrangement and:the vibrations from the vehicle wheel are transmitted to the bogie frame and the vibrations are generated.

Further, the vibrations according to the unbalance component due to the rotation of the vehicle wheel are transmitted to the bogie frame. Further, the vibrations of the rotation frequency component which are caused by the unbalance component according to the rotation of a drive system (a main electric motor etc.) are transmitted to the respective parts of the bogie frame.

These vibrations are solid-propagated to the car body side through the traction link means being a connection member between the bogie frame and the car body, the yaw damper etc., or the air cushion portion (the air spring member portion) and these vibrations become the noises in the inner side car. When the particular vibration number of the bogie frame and the excitation frequency are coincided, since the vibrations of the bogie frame are promoted, accordingly the most suited property of the bogie frame is performed.

The particular vibration of the bogie frame itself which is determined by the drive system is 10-300 Hz degree. Further, in the rotation vibrations which are generated in accordance with the unbalance of the drive system, the component having a size less than 10 (m/s²) from one (1) time to three (3) times of the rotation vibration component f₁ of the electric motor shaft is comparative remarkably.

These rotation vibration component f₁ - 3f₁ is solid-propagated to the car body side through the link portion being the connection member between the bogie frame and the car body, the damper portion or the air cushion portion. For example, the rotation vibration component f₁ is 80 Hz, the rotation vibration component 2f₁ is 160 Hz, the rotation vibration component 3f₁ is 240 Hz. For this reason, it is required to reduce the vibrations from the low frequency area having 10 Hz degree to 300 Hz.

Preferably, an object of the present invention is to provide a railway vehicle and a railway vehicle use bogie car so as to restrain the noises in an inner side car by reducing the vibrations which are transmitted from a bogie frame to a car body.

Preferably, the above stated object can be attained by installing a vessel to which a movable member is accommodated to a bogie car for supporting a car body of the car body.

### Brief Description of Drawing:

Fig. 1 is a horizontal cross-sectional view showing a bogie frame of a bogie car of a railway vehicle of one embodiment according to the present invention;
Fig. 2A is an enlargement view showing an essential portion of a side beam of the bogie frame of the bogie car of the railway vehicle Fig. 1;
Fig. 2B is 2B-2B cross-sectional view of Fig. 2A;
Fig. 2C is 2C-2C cross-sectional view of Fig. 2A;
Fig. 3 is an enlargement view showing an essential portion of a joining beam of the bogie frame of the bogie car of the railway vehicle of Fig. 1;
Fig. 4 is a plane view showing a bogie frame a bogie car of a railway vehicle of another embodiment according to the present invention;
Fig. 5 is IV-IV cross-sectional view of Fig. 4;
Fig. 6 is a side face view showing an air cushion receiving stand portion of another embodiment according to the present invention;
Fig. 7 is VII-VII cross-sectional view of Fig. 6;
Fig. 8 is a side face view showing an installation portion of an electric motor the bogie car of the railway vehicle of another embodiment according to the present invention;
Fig. 9 is a plane view showing a construction view of a bogie car of a railway vehicle according to the prior art;
Fig. 10 is a side face view showing the bogie car of the railway vehicle of Fig. 9;
Fig. 11 is a simplified view of a bogie frame of the bogie car of the railway vehicle of Fig. 9;
Fig. 12 is a perspective view showing an upper and a lower pitching vibration mode of the bogie frame of the bogie car of the railway vehicle as an already public known technique;
Fig. 13 is a plane view showing a right and a left yawing vibration mode of the bogie frame of the bogie car of the railway vehicle as an already public known technique;
Fig. 14 is a modified view of a before and a back primary bending vibration mode of a lateral beam of the bogie frame of the bogie car of the railway vehicle as an already public known technique;
Fig. 15 is a modified view of a before and a back secondary bending vibration mode of a lateral beam of the bogie frame of the bogie car of the railway vehicle as an already public known technique;
Fig. 16 is a modified view of a before and a back thirdly bending vibration mode of a lateral beam of the bogie frame of the bogie car of the railway vehicle as an already public known technique;
Fig. 17 is a modified view of an upper and a lower primary bending vibration mode of a lateral beam of the bogie frame of the bogie car of the railway vehicle as an already public known technique;
Fig. 18 is a modified view of an upper and a lower secondary bending vibration mode of a lateral beam of the bogie frame of the bogie car of the railway vehicle as an already public known technique; and
Fig. 19 is a modified view of an upper and a lower thirdly bending vibration mode of a lateral beam of the bogie frame of the bogie car of the railway vehicle as an already public known technique.

### Description of the Invention:

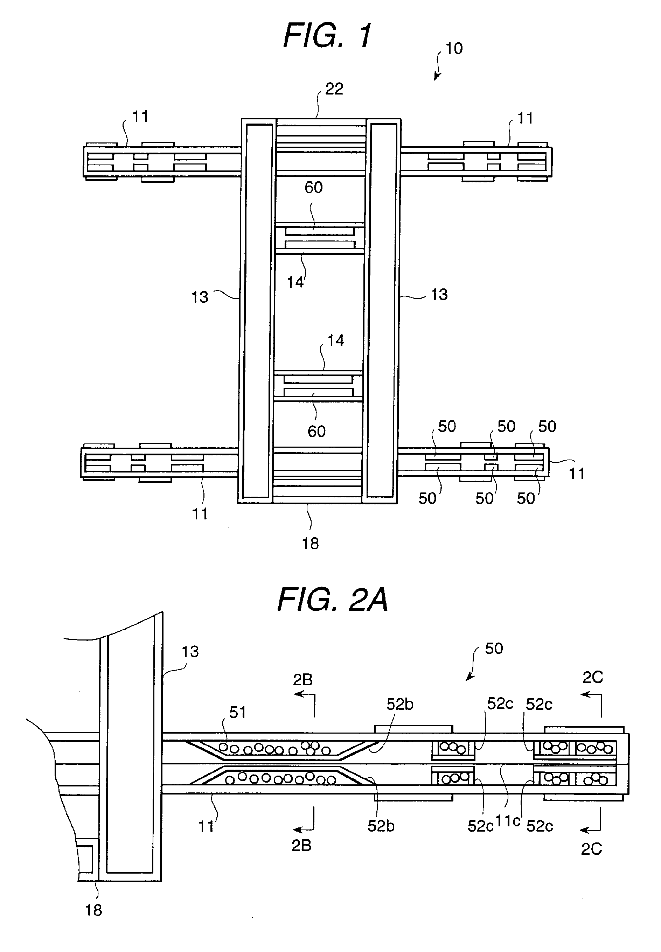

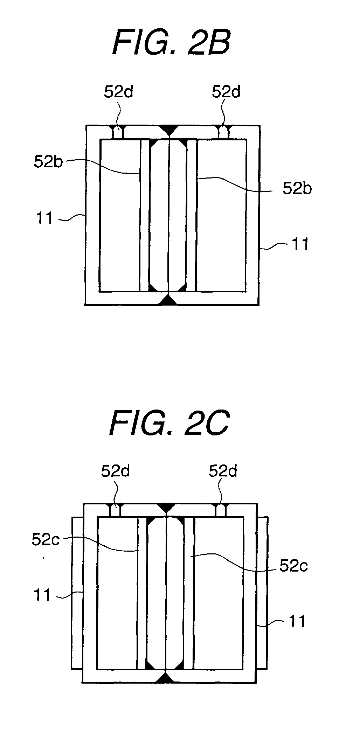

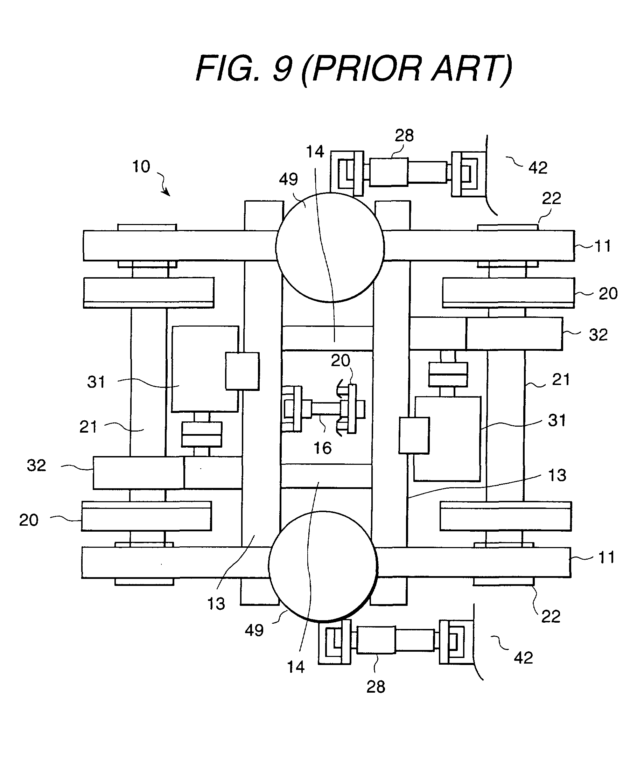

One embodiment of a railway vehicle and a railway vehicle use bogie car according to the present invention will be explained referring to from Fig. 1, Figs. 2A, 2B and 2C to Fig. 3, with a comparison with the prior art construction shown in from Fig. 9 to Fig. 13. A bogie frame 10 of the bogie car comprises of two side beams 11 which are arranged along to a running direction and two lateral beams 13 which connect to the two side beams 11. The lateral beam 13 is connected according to two beams 14. The lateral beam 13 is connected to a member (in generally, it is called as "a center pin") which is lifted down from a lower face of a car body 40 through a traction link 16.

A right portion and a left portion of the bogie frame 10 are connected to a member 42 which is lifted down from a lower face of the car body 40 through a yaw damper 28. A vehicle axle 21 having vehicle wheels 20 is supported according to an axle box 22. The axle box 22 supports the side beam 11 through a spring member 23 and a damper 24. An electric motor 31 for driving the vehicle axle 21 and reduction gears 32 are installed on the lateral beam 13. Between the bogie frame 11 and the car body 40, an air cushion member 49 is installed.

The vibrations which are generated according to the irregular arrangement of the track or the vibrations which are generated according to the rotation unbalance of the vehicle wheel are transmitted mainly from the vehicle wheels 20 to the side beam 11 or the lateral beam 15 etc. through the spring member 23 and the damper 24.

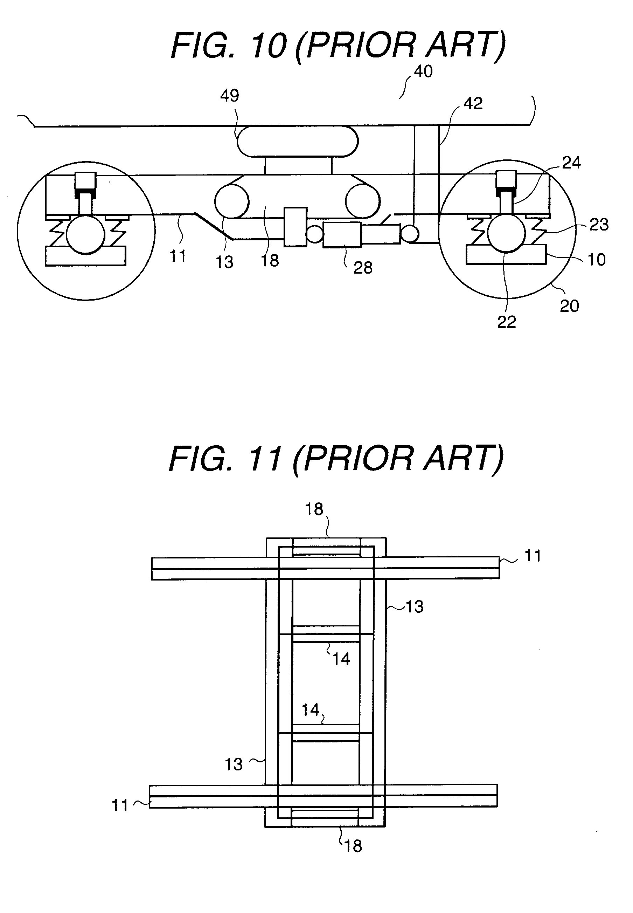

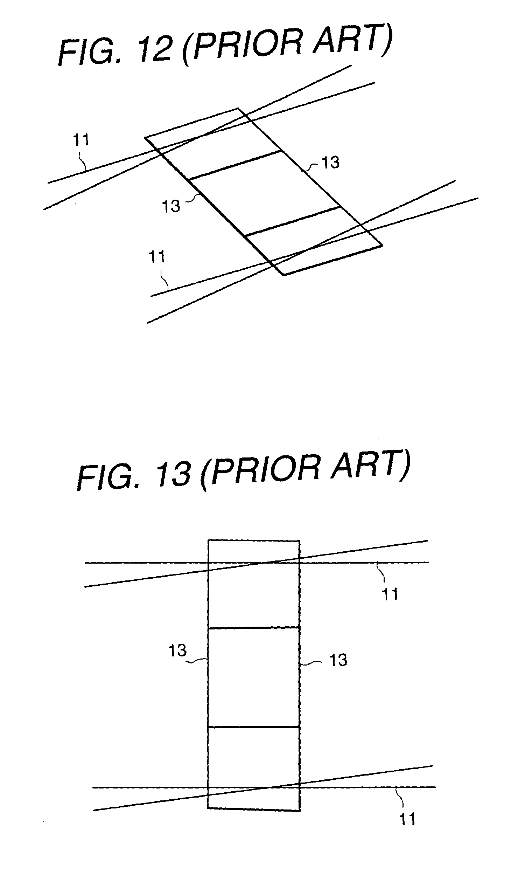

Fig. 11 shows a plane view in which a skeleton of the bogie frame 10 is simplified and a center line is shown by a bold line. In Fig. 12, in a case where the excitation is added from the upper and lower direction from the track, a deformation state of the bogie frame 10 is shown by a bold line.

The particular vibration mode (the deformation view) which is determined by the lateral beam 11 and the spring member 23 etc. is a pitching vibration having 10-100 Hz band area (herein, under the state where the side beams at the both sides are deformed in the same phase), in which as a fulcrum at a vicinity of four spring members 23, the bogie frame 10 vibrates in the upper and lower direction (the deformed state of the side beam 11 is shown by a bold line. In from Fig. 12 to Fig. 19, the bold lines show the deformed states).

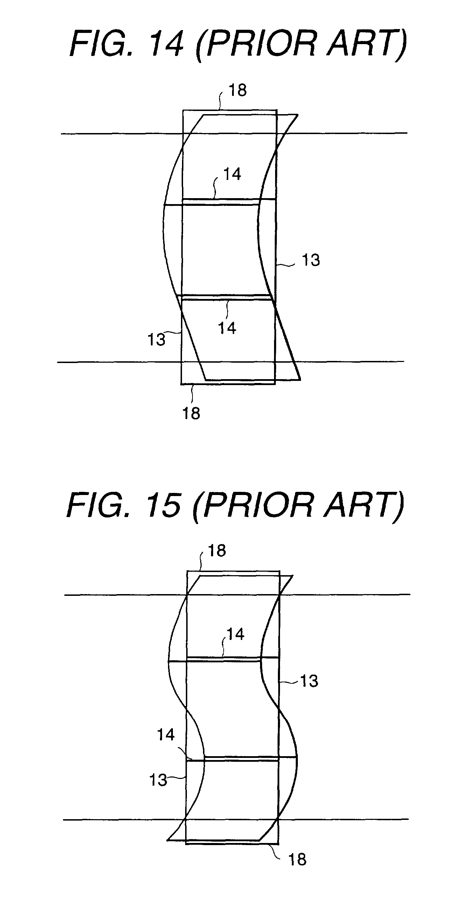

Further, in Fig. 14, the deformation state of the bogie frame 10 of a case where the right direction and the left direction excitations are added from the track is shown by a bold line. In this case, the yawing vibration (the right direction and the left direction) having 10-100 Hz band area of the side beam 11 generates.

As to the rotation unbalance according to the vehicle wheel, a primary component is 80-100 Hz degree. A vibration control apparatus against the above stated exciting vibration will be explained referring to from Fig. 1 to Fig. 5. To an interior portion of the side beam 11 which is a portion for installing the spring member 23 etc., a vibration control apparatus 50 is installed.

The vibration control apparatus 50 is mainly comprised of vessels 52b and 52c (when it is unnecessary to discriminate the both, it is abbreviated as "52") for accommodating particle shape members 51. To the interior,portion of the side beam 11 the vessel 52 is combined according to a welding manner. One face of the vessel 52 is constituted by a face of the side beam 11. The particle shape member 51 is contacted to the face of the side beam 11.

The vessel 52 is a box body which works a role of a reinforcement of a longitudinal direction of the side beam 11. The side beam 11 which is formed to ⊐ shape using a pressing machine is laid on a floor and a welding for constituting the vessel 52 is carried out from an upper portion. The member of the vessel 52b is provided to be a reinforcement plate to the ordinary side frame 11. A rib of a longitudinal direction of the vessel 52c is provided to form a reinforcement plate to the ordinary side beam 11. On the this reinforcement plate, a plate is welded, and then the vessel 52c is formed. The reinforcement plate etc. for constituting the vessel 52 is welded to the side beam 11 to not flow out the particle shape member 51. In this embodiment according to the present invention, the reinforcement plates are comprised of the vessel 52b and the vessel 53c.

After the installation of the vessel 52, by welding the members of the two side beams 11 at a center line 11c of the side beam 11, the side beam 11 is constituted. After the welding, the bogie frame 10 is annealed, the plate of the upper portion of the side beam 11 in which the vessel 52 is positioned a hole 52d is opened. After the annealing, from the hole 52d the particle shape member 51 is accommodated. After that this hole is plugged or closed by a bolt etc..

The particle shape member 51 is a sphere body using a ferro system or a lead system material. A particle size of the particle shape member 51 is 0.1 mm - 10 mm degree. When a fill-up density of the particle shape member 51 is small, the damping effect is small, when the particle shape member 51 is large, the move of the particle shape size of the particle shape member 51 becomes bad and then the vibration control effect can be lessened. The fill-up density of 70-95% of the particle shape member 51 is preferable. The amount of the particle shape member 51 is necessary.

The fill-up density of the particle shape member 51 will be explained. For example, when the particle shape member 51 having a particle diameter of 1 mm is used in a particle use, the particle shape member 51 having a particle diameter of 1 mm is filled up fully in the vessel 52 to be subjected to a subject and a weight in this time is measured. This condition is the fill-up density of the particle shape member 51 of 100%. The fill-up density of 70% of the particle shape member 51 means an accommodation condition where the particle shape member 51 same to the case of the fill-up density of the particle shape member 51 of 100% is accommodated with 70% in the weight ratio.

With this construction, when the side beam 11 vibrates, the particle shape member 51 vibrates. According to the collision of the particle shape members 51 each other and the collision between the vessel 52 and the particle shape member 51, the vibrations at the end portion of the side beam 11 can be reduced. The vibrations of the unbalance component according to the rotation of the vehicle wheel 20, the upper and lower pitching vibrations from the bogie frame 10, and the right and left yawing vibrations can be absorbed.

In particular, the vibrations from the vehicle wheel 20 have a comparative large component and since the vibration control apparatus 50 is arranged at the position where the vibrations are transmitted, the move of the particle shape member 51 is activated. Accordingly, the upper and lower direction vibrations and the right and left direction vibrations can be reduced remarkably.

As a result, the upper and lower direction vibrations and the right and left direction vibrations which are solid-propagated from the vehicle wheel 20 to the side beam 11 through the spring member 17 etc. can be reduced remarkably. Accordingly, the vibrations at the car body 40 side which are solid-propagated from the bogie frame 1 0 through the connection member can be reduced.

Further, the vibration control apparatus 50 can be installed to the outer face of the side beam 11. Further, the size of the particle shape member 51 can be changed. Further, the particle shape member 51 can be formed by a multi-angle shape. Further, since the particle shape member relates to the weight amount and this particle shape member 51 can be formed with a powder shape member.

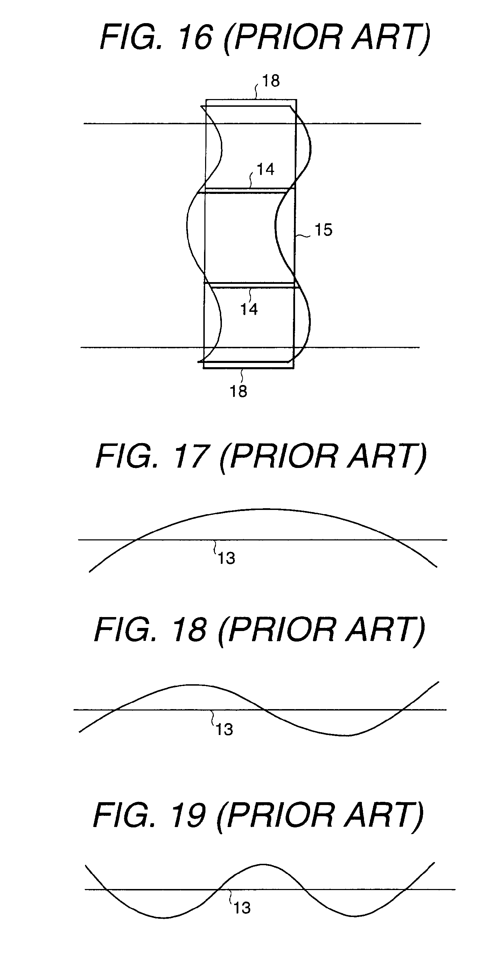

Further, the bogie frame 10 vibrates as shown in from Fig. 14 to Fig. 19. From Fig. 14 to Fig. 16 show the vibration modesof the before and back direction (an advancing direction) of the lateral beam 13. From Fig. 17 to Fig. 19 show the vibration modes of the upper and lower direction of the lateral beam 13. A joining beam 14 for joining the lateral beams 13 and 13 vibrates similarly.

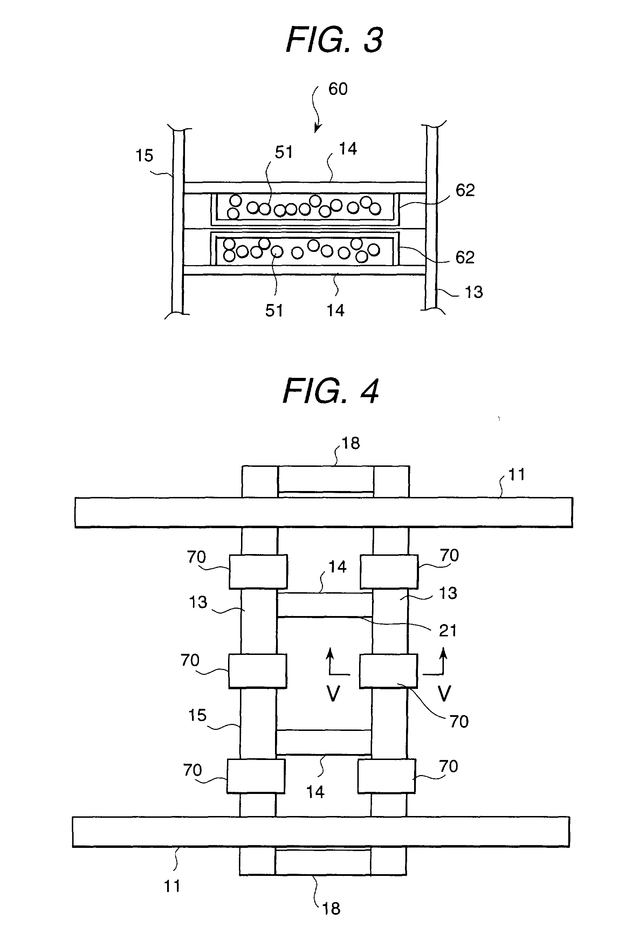

Hereinafter, an example in which the vibration countermeasure is performed to the joining beam 14 will be explained referring to Fig. 3. To a hollow portion of the joining beam 14, a vibration control apparatus 60 in which the particle shape member 51 is accommodated. The particle shape member 51 is inserted into the vessel 52. The joining beam 14 has ⊐ shape as shown in the side beam 11 and after a vessel 62 which is manufactured by a pressing manner has welded to an inner side, by welding the members of the two joining beams 14, one joining beam 14 is obtained.

With the above stated construction, when the lateral beam 13 vibrates, according to the vibration control apparatus 60 of the joining beam 14, the vibrations of the lateral beam 13 can be reduced. In this time, by corresponding the particular vibration at the primary bending mode of the lateral beam 13 at the before and back direction which generates until 300 Hz band area, the secondary bending mode and the thirdly bending mode, the vibration control effect can be obtained further.

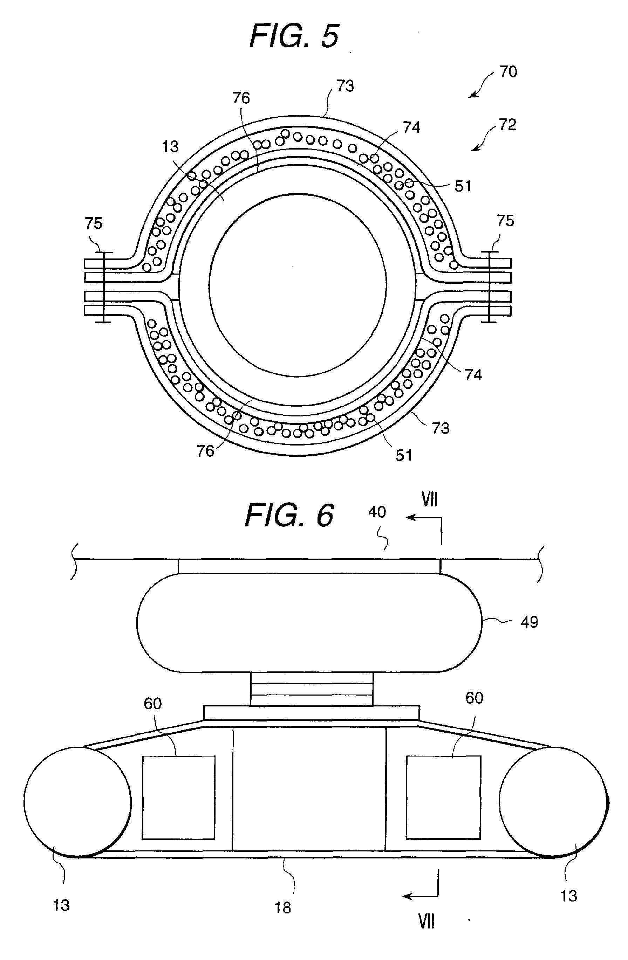

Next, an example in which the vibration countermeasure is performed to the lateral beam 13 will be explained referring to Fig. 4 and Fig. 5. To the outer portion of the lateral beam 13 a vibration control apparatus 70 is installed. The reason why the vibration control apparatus' 70 is installed to the outer portion, the lateral beam 13 is formed with a pipe structure. Between the side beam 11 and the joining beam 14, between the joining beams 14 and 14 each other, the vibration control apparatus 70 is installed.

The vibration control apparatus 70 is comprised of mainly the vessel 72 for accommodating the particular shape member 51. The vessel 72 is comprised of a vessel 73 for comprising an outer side plate having a semi-circular shape sectional cross-section face and an inner side plate 74 having a semi-circular shape sectional cross-sectional face. A flange of the upper and lower vessels 72 and 72 is connected to each other through a bolt-nut 75 and is fixed to an outer face of the side beam 11. Between the lateral beam 13 and the inner side plate 74, a rubber sheet 76 is arranged.

The outer side plate 73 is the vessel for accommodating the particular shape member 51 and the inner side plate 74 itself is a lid for this. The vessels 73 and 74 are manufactured by a pressing processing manner. To the vessel 73 the particular shape member 51 is accommodated and after the vessel 73 is covered according to the vessel 74, the four flanges of the vessels 73 and 74 are carried out the spot welding manner and the vessel 72 is constituted. To the flange a sealing member is coated and then a water prevention function can be attained.

A rubber sheet 76 is attached to the inner side plate 74. A thickness of the rubber sheet 76 is 1 mm to 3 mm degree. The rubber sheet 76 is a multi-layer sheet.

With the above stated construction, by corresponding to the particular vibrations of the primary bending mode, the secondary bending mode and the thirdly bending mode in the before and back direction of a lateral beam 15 shown in from Fig. 14 to Fig. 16, the vibration control effect can be obtained.

Further, as shown in from Fig. 17 to Fig. 19, by corresponding to the particular vibrations of the primary bending mode, the secondary bending mode and the thirdly bending mode in the upper and lower direction of the lateral beam 13 shown in from Fig. 17 to Fig. 19 which are occurred until 300 Hz band area, the vibration control effect can be obtained. Since the vessels 72 and 72 are fixed to the lateral beam 13 through the rubber sheet 76, the vessels 72 and 72 act in a dynamic absorption and in comparison with the non-existence thereof, the vibration control effect can be increased.

Further, the installation of the vibration control apparatus to the side beam and the joining beam is carried out naturally at the same time and the respective both vibration control effects can be obtained. Further, the lateral beam and the installation of the vibration control apparatus to the side beam are carried out naturally at the same time and the respective both vibration control effects can be obtained.

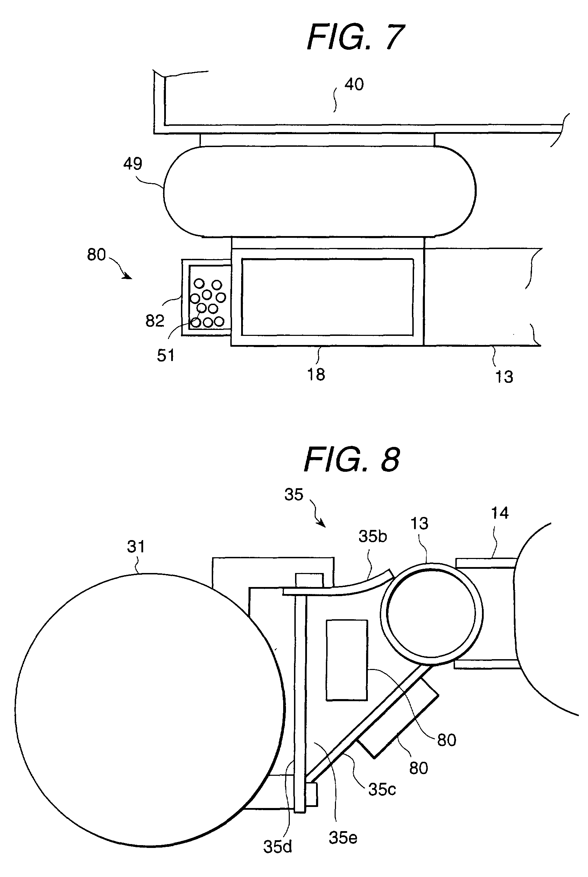

Embodiments shown in Fig. 6 and Fig. 7 will be explained. An outside portion of the side face of the receiving stand 18 for supporting the air cushion member (the air spring member) 49 a vibration control apparatus 80 is installed. The receiving stand 18 is connected to the end portions of the lateral beams 13 and 13. The vibration control apparatus 80 accommodates the particle shape member 51, in the interior portion of the vessel 82 and to a face of the side portion of the air cushion member receiving stand 18 the vibration control apparatus 80 is installed according to the welding manner or the bolts.

When the vessel 82 is installed to the receiving stand 18 according to the welding manner, to an upper face of the vessel 82 a hole for accommodating the particle shape member 51 is provided. This hole can be closed. When the vessel 82 is fixed to the receiving stand 18 according to the bolts, as shown in the embodiment of Fig. 5, the vessel 82 is formed with a vessel having a lid. Between this lid of the vessel 82 and the receiving stand 81, a rubber sheet or a rubber seat is arranged.

With the above stated construction, the vibrations which are transmitted from the lateral beam 15 of the bogie frame 10 and the side beam 11 can be reduced according to the vibration control apparatus 80.

Further, to an outer peripheral face of the air cushion member receiving stand 18 the vibration control apparatus 80 can be installed.

An embodiment shown in Fig. 8 will be explained. The electric motor 31 for rotating the vehicle axles 21 is lifted down to,the coupling member 35 which isinstalled to the lateral beam 13. This is an already public known technique. The coupling member 35 comprises of an upper plate 35b, a lower plate 35c, a longitudinal plate 35d in the electric motor 31 side and a side face plate 35e for connecting the upper and lower plates 35b and 35c.

To the side face plate 35e and the lower face plate 35c, the vibration control apparatus 80 is installed. The vibration control apparatus 80 is stated in the above stated construction. Accordingly, the vibrations which are generated from the electric motor 31 can be restrained.

Further, to the side face etc. of a case of the electric motor 31 when the vibration control apparatus 80 is installed, the same vibration control effects can be obtained.

The technical range according to the present invention is not limited to the wordings of each claims of the claims and the wordings stated in the item of the means for solving the problems and but it refers to a range in which the person who belongs to this technical field can be placed easily.

According to the present invention, the vibrations which are transmitted from the vehicle wheels to the bogie frame and to the car body according to the increase in the track irregular arrangement can be restrained and the noises in the inner side car can be reduced.

## Claims

1. A railway vehicle, characterized in that
to a bogie frame for supporting a car body of a railway vehicle, a vessel to which a movable member is accommodated is provided.

2. A railway vehicle according to claim 1, characterized in that
said vessel is installed through a rubber sheet.

3. A railway vehicle according to claim 1, characterized in that
said vessel is installed to an interior portion of a side beam of said bogie frame and a reinforcement plate of said interior portion of said side beam forms a constituting member of said vessel.

4. A railway vehicle according to claim 3, characterized in that
said vessel is fixed to said interior portion of said side beam according to a welding manner and to an upper face of said side beam of an upper portion of said vessel a hole to which said movable member is accommodated is provided, and said hole is closed.

5. A railway vehicle according to claim 1, characterized in that
said vessel is fixed to said bogie frame according to a welding manner and to a member for constituting said vessel a hole to which said movable member is accommodated is provided, and said hole is closed.

6. A railway vehicle according to claim 1, characterized in that
to a joining beam which becomes a combination portion of two lateral beams of said bogie frame, said vessel is arranged.

7. A railway vehicle according to claim 1, characterized in that
to an outer face of a lateral beam of said bogie frame, said vessel is installed.

8. A railway vehicle according to claim 1, characterized in that
to a coupling member for lifting down of an electric motor, said vessel is installed, and said coupling member is welded to said vessel.

9. A railway vehicle according to claim 1, characterized in that
to a receiving stand for mounting an air cushion member, said vessel is installed.

10. A railway vehicle use bogie car, characterized in that to a bogie frame for supporting a car body of a railway vehicle, a vessel to which a movable member is accommodated is provided.

11. A railway vehicle use bogie car according to claim 10, characterized in that
said vessel is installed through a rubber sheet.

12. A railway vehicle use bogie car according to claim 10, characterized in that
said vessel is installed to an interior portion of a side beam of said bogie frame and a reinforcement plate of said interior portion of said side beam forms a constituting member of said vessel.

13. A railway vehicle use bogie car according to claim 12, characterized in that
said vessel is fixed to said interior portion of said side beam according to a welding manner and to an upper face of said side beam of said vessel a hole to which said movable member is accommodated is provided, and said hole is closed.

14. A railway vehicle use bogie car according to claim 10, characterized in that
said vessel is fixed to said bogie frame according to a welding manner and to a member for constituting said vessel a hole to which said movable member is accommodated is provided, and said hole is closed.

15. A railway vehicle use bogie car according to claim 1.0, characterized in that
to a joining beam which becomes a combination portion of two lateral beams of said bogie frame, said vessel is arranged.

16. A railway vehicle use bogie car according to claim 10, characterized in that
to an outer face of a lateral beam of said bogie frame, said vessel is installed.

17. A railway vehicle use bogie car according to claim 10, characterized in that
to a coupling member for lifting down of an electric motor, said vessel is installed, and said coupling member is welded to said vessel.

18. A railway vehicle use bogie car according to claim 10, characterized in that
to a receiving stand for mounting an air cushion member, said vessel is installed.
